# EUROPÄISCHE PATENTSCHRIFT

(11) **EP 1 743 555 B1**
(45) Veröffentlichungstag und Bekanntmachung des Hinweises auf die Patenterteilung: **13.06.2012**
(21) Anmeldenummer: 06014513.3
(22) Anmeldetag: 12.07.2006
(51) Int. Cl.: A47J 31/46

(54) **Auslaufverteiler für Espressomaschinen**
Outlet of a distributor of an espressomachine
Sortie d'un distributeur pour machines à espresso

(30) Priorität: 16.07.2005 DE 202005011203 U
(43) Veröffentlichungstag der Anmeldung: 17.01.2007
(73) Patentinhaber: Eugster/Frismag AG, 8580 Amriswil (CH)
(72) Erfinder: Oehninger, Max, 8712 Stäfa (CH)
(74) Vertreter: Schubert, Siegmar

(56) Entgegenhaltungen:
- WO-A-02/19877
- WO-A-2004/060121
- DE-U1- 7 700 199
- DE-U1- 20 320 569

## Beschreibung

Die Erfindung betrifft einen Auslaufverteiler für Espressomaschinen nach dem Oberbegriff des Anspruchs 1.

Aus der Praxis bekannte Espressomaschinen sind meist mit Auslaufverteilern ausgestattet, die den Kaffee bzw. Espresso, der in der Maschine mit einer Brüheinheit aufgebrüht wird, gleichmäßig auf zwei Tassen verteilen. Die angestrebte gleichmäßige Verteilung kann jedoch zum Beispiel durch aus einer Brühkammer der Brüheinheit austretende und in der Crema des Espressos enthaltene stark unterschiedlich große Luftblasen gestört werden.

Es ist bereits bekannt, einen Espressomaschinen-Filterträger so auszubilden, daß die aus zwei Auslauflöchern fließende Crema nicht durch größere Blasen unterbrochen wird und das eine oder andere Auslaufloch blockiert wird, wodurch die beiden Tassen unter dem Filterträger ungleichmäßig gefüllt würden (DE-G 29502595.6). Hierzu ist es im einzelnen bekannt, den Espressomaschinenfilterträger mit einem Siebeinsatz, unter dem sich ein Sammelraum für gebrühten Espresso befindet und in dessen Boden die Auslauflöcher ausgeformt sind, mit einer haubenförmigen Abdeckung in dem Sammelraum über den Auslauflöchern zu versehen, wobei ein Randbereich der haubenförmigen Abdeckung mehrere Durchtrittsöffnungen aufweist.

Diese Lösung setzt also einen voluminösen Filterträger voraus, der in dieser Form in Espressomaschinen, die zum Brühen von Espresso unter der Verwendung von Portionskapseln oder Pouches ausgebildet sind, nicht vorhanden ist.

Bei einem Auslaufverteiler der eingangs genannten Gattung sind von einem gemeinsamen Kaffeeeinlauf zwei Teilauslaufleitungen als Bereiche von einer Gabelung des Einlaufs bis zu einem jeweiligen freien Auslauf ausgebildet, der nach unten zu einer Prallfläche gerichtet ist (WO 02/19877 A). Die Prallfläche bildet den Boden einer Prallkammer, die durch eine Trennwand in der Mitte geteilt sein kann. Unter der Prallkammer ist ein Auslaufkörper angeordnet, der ebenfalls durch eine Trennwand geteilt ist und im Abstand unter der Prallfläche zwei Auslauföffnungen aufweist, und zwar je eine Auslauföffnung in jedem Teil des Auslaufkörpers. In der geteilten Prallkammer ist ein erster Kaffee-Strömungsweg von deren Oberseite zu dem Boden hin gebildet und setzt sich nach unten in einen ersten Teil des Auslaufkörpers fort. Ein zweiter Kaffee-Strömungsweg verläuft ebenfalls vollständig von oben nach unten, und zwar in den zweiten Teil des Auflaufkörpers. - Auch dieser Auslaufverteiler ist voluminös, insbesondere in vertikaler Richtung wegen der über die gesamte Länge der Kaffee-Strömungswege im wesentlichen gleichen Strömungsrichtung.

Der vorliegenden Erfindung liegt die Aufgabe zugrunde, einen Auslaufverteiler für Espressomaschinen zu schaffen, der den störenden Effekt unterschiedlich großer Luftblasen bei kompakter Bauweise vermeidet, wenn gesammelter gebrühter Espresso einem gemeinsamen Kaffeeeinlauf eines solchen Auslaufverteilers zugeführt wird.

Diese Aufgabe wird durch die Ausbildung des Auslaufverteilers mit den in Anspruch 1 angegebenen Merkmalen gelöst.

Die Strömungsberuhigungsmittel in dem Auslaufverteiler umfassen eine Prallwand in einer Prallkammer, auf die je ein offener Endabschnitt jeweils einer Teilauslaufleitung gerichtet ist, die von dem gemeinsamen Kaffeeeinlauf abgezweigt ist. Durch den Aufprall des Kaffeestroms, eines Teilstroms aus der Teilauslaufleitung gegen die Prallwand wird ein Druckstoß, der durch Öffnen eines Cremaventils in der Brüheinheit ausgelöst wird, gedämpft, und größere Luftblasen in dem aufgebrühten Kaffee bzw. in der Crema platzen. Der derart beruhigte Kaffeestrom fließt nach unten zu der Teilauslauföffnung in dem jeweiligen Auslaufkörper in gleichförmigerer Konsistenz, die eine gleichmäßige Verteilung der Teilkaffeeausläufe aus den Teilauslauföffnungen des Auslaufverteilers bewirkt.

Erfindungsgemäß sind die Auslaufkörper zumindest innen zylindrisch ausgebildet, weshalb sie als Auslaufzylinder bezeichnet werden können, und oben durch die zugehörige Prallwand geschlossen. Ein Innenraumteil des Auslaufkörpers an der Prallwand und einem benachbarten zylindrischen Innenwandabschnitt kann auch als Prallkammer bezeichnet werden. Auch die Endabschnitte der Teilauslaufleitungen sind zylindrisch, und zwar mit kleinerem Radius als der Innenradius des Auslaufkörpers ausgebildet, so daß innen zwischen einer Mantelfläche des Prallkörpers und dem Endabschnitt der Teilauslaufleitung ein zylindrischer Auslaufkanal gebildet ist. Indem die Endabschnitte der Teilauslaufleitungen in den Prallkammern bzw. den Auslaufkörpern nach oben gegen die zugehörigen Prallwände gerichtet sind, wird in den Auslaufkörpern bei kompakter Dimensionierung die Länge der zylindrischen Auslaufkanäle zu den Teilauslauföffnungen groß, und die kleineren Blasen werden in den in den Auslaufkanälen gleichmäßig laminar herabfließenden Kaffee und bzw. Crema eingebunden.

Hierzu schließt sich gemäß Anspruch 2 besonders vorteilhaft in dem Auslaufkörper je ein Zentrierdorn an einen der nach oben gerichteten Endabschnitte der Teilauslaufleitungen unten an. Dadurch wird der zylindrische Auslaufkanal nach unten verlängert.

Indem jeder der Teilkaffeeströme in einem der Auslaufkörper durch den verlängerten zylindrischen Auslaufkanal nach unten fließt, wird er nochmals beruhigt, bevor er aus der Teilauslaßöffnung des Auslaufkörpers austritt. Durch die Zentrierdorne werden zentrierte Teilkaffeeausläufe erreicht, die als laminare Strömungen aus den Teilauslaßöffnungen ausströmen können. Der laminare Auslauf aus in den Teilauslaßöffnungen wird unterstützt, wenn in diesen gemäß Anspruch 3 jeweils ein an sich bekanntes Verteilerkreuz angeordnet ist.

Um Restkaffee aus den aufwärts gerichteten Endabschnitten der Teilauslaufleitungen zu beseitigen, sind diese gemäß Anspruch 4 zweckmäßig jeweils durch eine zentrale Durchgangsbohrung durchbrochen, die durch eine untere Wand des Endabschnitts und durch den sich hieran anschließenden Zentrierdorn hindurchgeht.

Konstruktiv einfach sind gemäß Anspruch 5 die Teilauslaufleitungen als Rohrleitungen ausgebildet, und die Endabschnitte der Teilauslaufleitungen sind Umlenkstutzen, welche die horizontale Strömung des Kaffees in den Teilauslaufrohren in eine vertikale Strömung nach oben umlenken.

Gemäß Anspruch 6 sind die Teilauslaufleitungen von einer unteren Öffnung eines Kaffeeeinlaufrohrs abgezweigt, womit der Auslaufverteiler trotz der zusätzlichen Auslaufkörper verhältnismäßig massearm bzw. leicht ausgebildet ist.

Ein Ausführungsbeispiel der Erfindung wird im folgenden anhand einer Zeichnung mit drei Figuren erläutert, woraus sich im einzelnen weiter vorteilhafte Merkmale der Erfindung ergeben können. Es zeigt:
- Figur 1: einen Schnitt durch den Auslaufverteiler in einer vertika- len Schnittebene in vergrößerter Darstellung,
- Figur 2: eine Ansicht auf eine Einzelheit des Auslaufverteilers von unten, nämlich auf eine Teilauslauföffnung und
- Figur 3: eine Aussicht durch die Schnittebene A - B des Auslauf- verteilers gemäß Figur 1.

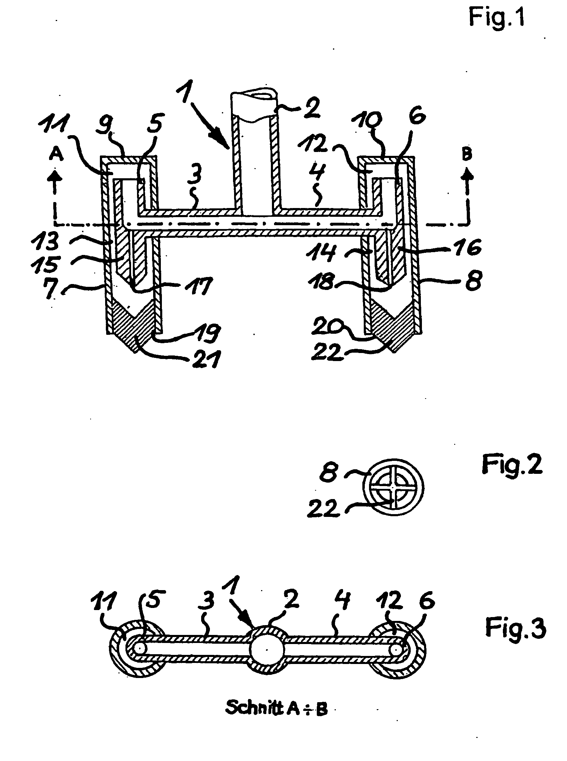

In den Figuren 1 und 3 ist mit 1 eine Auslaufeinheit einer Espressomaschine bezeichnet, mit der die Espressomaschine auch nachträglich ausgestattet werden kann. Sie umfaßt einen Kaffeeeinlauf in Form eines Kaffeeeinlaufrohrs 2, von dem unten zwei Teilauslaufrohre 3 und 4 als Teilauslaufleitungen abgezweigt sind. Endabschnitte der Teilauslaufleitungen bzw. Teilauslaufrohre sind als Umlenkstutzen 5 und 6 ausgebildet und in dem Auslaufkörper 7 und 8 nach oben gerichtet, so daß jeweils eine nicht bezeichnete Öffnung des Umlenkstutzens 5 bzw. 6 im Abstand zu einer Prallwand 9 bzw. 10 angeordnet ist und auf diese gerichtet ist. Mit der Prallwand 9 bzw. 10 ist jeweils der Auslaufkörper 7 bzw. 8 oben abgeschlossen. Somit ist in dem Auslaufkörper 7 bzw. 8, der als Auslaufzylinder geformt ist, durch die Prallwand 9 bzw. 10 und einen angrenzenden zylindrischen Wandbereich des Auslaufzylinders 7 bzw. 8 eine Prallkammer 11 bzw. 12 gebildet, die nach unten in einen zylindrischen Auslaufkanal 13 bzw. 14 übergeht. Der Auslaufkanal 13 bzw. 14 befindet sich zwischen einer Innenwand des Auslaufzylinders 7 bzw. 8 einerseits und dem darin angeordneten Umlenkstutzen 5 bzw. 6 sowie einem sich unten an den Umlenkstutzen 5 bzw. 6 anschließenden Zentrierdorn 15 bzw. 16 andererseits.

Wie in einzelnen insbesondere aus Figur 1 ersichtlich, ist eine Durchgangsbohrung 17 bzw. 18 durch eine nicht bezeichnete Wand des Umlenkstutzens 5 bzw. 6 und den den Umlenkstutzen quasi nach unten verlängernden Zentrierdorn 15 bzw. 16 geführt, so daß Restkaffee aus dem Kaffeeeinlaufrohr 2, den Teilauslaufrohren 3, 4 und den Umlenkstutzen 5, 6 durch die Durchgangsbohrungen 17, 18 nach unten abfließen kann. Die Durchgangsbohrungen 17, 18 können auch als Bypässe zu den Auslaufkanälen 13, 14 aufgefaßt werden.

Unten an den Auslaufkörpern 7, 8 befinden sich Teilauslauföffnungen 19, 20, in denen Verteilerkreuze 21 bzw. 22 angeordnet sind. Die Ausbildung eines der Verteilerkreuze, z.B. 22, ergibt sich aus der Ansicht von unten gemäß Figur 2.

Im Betrieb einer mit dem beschriebenen Auslaufverteiler ausgestatteten Espressomaschine wird der aus dem Brühraum durch Öffnen des Cremaventils der Brühkammer mit hoher Geschwindigkeit in das Kaffeeeinlaufrohr 2 einfließende Kaffeestrom in Teilströme in den beiden Teilauslaufrohren 3, 4 aufgeteilt. Jeder Teilstrom tritt über den Umlenkstutzen 5 bzw. 6 aus und trifft insbesondere auf die Prallwand 9 bzw. 10 der Prallkammer 11 bzw. 12. Hierdurch wird der Druckstoß, der durch das Öffnen des Cremaventils ausgelöst wird, gedämpft, und größere Luftblasen platzen. Anschließend fließt jeder somit gleichmäßigere Teilstrom durch einen der zylindrischen Auslaufkanäle 13, 14, in denen er weiter beruhigt wird und die kleineren Blasen eingebunden werden, bis er über die Verteilerkreuze 21 bzw. 22, die zusammen mit den Zentrierdornen 15 bzw. 16 zentrierte Teilausläufe bewirken, aus der Auslaufeinheit 1 praktisch laminar austritt, wobei gleich große Teilströme die beiden Teilauslaßöffnungen 19, 20 verlassen. Durch diese Teilauslaßöffnungen 19, 20 wird auch der Kaffee abgeleitet, der durch die Durchgangsbohrungen 17, 18 strömt und der sonst bei nicht vorhandenen Durchgangsbohrungen als Kaffeerest in den Rohren 2 - 4 und den Umlenkstutzen 5, 6 bis zum nächsten Brühvorgang oder einem zwischengeschalteten Reinigungsvorgang verbleiben würde.

### Bezugszeichenliste

- 1: Auslaufeinheit
- 2: Kaffeeeinlaufrohr (Kaffeeeinlauf)
- 3: Teilauslaufrohr (Teilauslaufleitung)
- 4: Teilauslaufrohr (Teilauslaufleitung)
- 5: Umlenkstutzen (Endabschnitt der Teilauslaufleitung)
- 6: Umlenkstutzen (Endabschnitt der Teilauslaufleitung)
- 7: Ausgangszylinder (Auslaufkörper)
- 8: Ausgangszylinder (Auslaufkörper)
- 9: Prallwand
- 10: Prallwand
- 11: Prallkammer
- 12: Prallkammer
- 13: zylindrischer Auslaufkanal
- 14: zylindrischer Auslaufkanal
- 15: Zentrierdorn
- 16: Zentrierdorn
- 17: Durchgangsbohrung
- 18: Durchgangsbohrung
- 19: Teil-Auslauföffnung
- 20: Teil-Auslauföffnung
- 21: Verteilerkreuz
- 22: Verteilerkreuz

## Patentansprüche

1. Auslaufverteiler für Espressomaschinen, mit einem gemeinsamen Kaffeeeinlauf (2) und wenigstens zwei mit diesem strömungsmäßig in Verbindung stehenden Teilauslauföffnungen (19, 20) sowie mit stromaufwärts der Teilauslauföffnungen angeordneten Strömungsberuhigungsmitteln,
wobei zwei von dem gemeinsamen Kaffeeeinlauf (2) abgezweigte Teilauslaufleitungen (3, 4) je einen offenen Endabschnitt (5, 6) aufweisen, der in je einer Prallkammer (11, 12) gegen eine Prallwand (9, 10) gerichtet ist, und
wobei je eine der Prallkammern (11, 12) in jeweils einem Auslaufkörper (7, 8) ausgebildet ist, der im Abstand unterhalb der Prallwand (9, 10) eine der Teilauslauföffnungen (19, 20) aufweist.,
**dadurch gekennzeichnet,**
**dass** die Auslaufkörper (7, 8) zumindest innen zylindrisch sind und oben durch je eine der Prallwände (9, 10) geschlossen sind und
**dass** zumindest die Endabschnitte (5, 6) der Teilauslaufleitungen (3, 4) zylindrisch sind, in je einem der Auslaufkörper (7, 8) nach oben gerichtet sind und zu diesem derart koaxial angeordnet sind, dass zwischen einer inneren Mantelfläche des Auslaufkörpers (7, 8) und dem Endabschnitt (5, 6) der Teilauslaufleitung (3, 4) ein zylindrischer Auslaufkanal (13, 14) gebildet ist, der oben zu der Prallwand hin offen ist und unten zu der Teilauslassöffnung (19, 20) des Auslaufkörpers (7, 8) hin offen ist.

2. Auslaufverteiler nach Anspruch 1,
**dadurch gekennzeichnet,**
**dass** sich in dem Auslaufkörper (7, 8) je ein Zentrierdorn (15, 16) an einen der nach oben gerichteten Endabschnitte (5, 6) der Teilauslaufleitungen (3, 4) unten anschließt.

3. Auslaufverteiler nach Anspruch 1 oder 2,
**dadurch gekennzeichnet,**
**dass** in den Teilauslauföffnungen (19, 20) jeweils ein Verteilerkreuz (21, 22) angeordnet ist.

4. Auslaufverteiler nach Anspruch 2 oder 3,
**dadurch gekennzeichnet,**
**dass** eine zentrale Durchgangsbohrung (17, 18) durch eine untere Wand des Endabschnitts (5, 6) und durch den sich unten an diese anschließenden Zentrierdorn (15, 16) hindurchgeht.

5. Auslaufverteiler nach einem der Ansprüche 1 - 4,
**dadurch gekennzeichnet,**
**dass** die Teilauslaufleitungen (3, 4) Rohrleitungen sind und dass die Endabschnitte der Teilauslaufleitungen (3, 4) als Umlenkstutzen geformt sind.

6. Auslaufverteiler nach einem der vorangehenden Ansprüche,
**dadurch gekennzeichnet,**
**dass** der Kaffeeeinlauf (2) ein Kaffeeeinlaufrohr ist und
**dass** von einer unteren Öffnung des Kaffeeeinlaufrohrs die Teilauslaufleitungen (3, 4) abgezweigt sind.

## Claims

1. Outlet of a distributor of an espresso machine with a common coffee inlet (2) and at least two partial outlet openings (19, 20) in flow-wise connection therewith and with flow smoothing means arranged upstream of the partial outlet openings,
wherein two partial outlet ducts (3, 4) branched off from the common coffee inlet (2) each include an open end section (5, 6) each directed in a baffle chamber (11, 12) against a baffle wall (9, 10), and
wherein one of the baffle chambers (11, 12) each is formed out within one outflow body (7, 8) having, in spaced relationship below the baffle wall (9, 10), one of the partial outlet openings (19, 20), **characterized in**
**that** the outflow bodies (7, 8) are cylindrical, at least in the interior thereof, and are closed on top by one of the baffle walls (9, 10) each, and
**that** at least the end sections (5, 6) of the partial outlet ducts are cylindrical, are upwardly directed in one of the outflow bodies (7, 8) each, and are co-axially directed relative thereto so that between an inner shell face of the outflow bodies (7, 8) and the end section (5, 6) of the partial outlet duct (3, 4) a cylindrical outflow channel (13, 14) is formed which is open on top towards the baffle wall and on the bottom is open towards the partial outlet opening (19, 20) of the outflow body (7, 8).

2. Outlet of a distributor according to claim 1,
**characterized in**
**that** in the outflow body (7, 8) a centring mandrel (15, 16) each is provided downwards in the elongation of one of the upwardly directed end sections (5, 6) of the partial outflow ducts (3, 4).

3. Outlet of a distributor according to claim 1 or 2,
**characterized in**
**that** in the partial outlet openings (19, 20) a distributor cross (21, 22) each is arranged.

4. Outlet of a distributor according to claim 2 or 3,
**characterized in**
**that** a central passage bore (17, 18) passes through a lower wall of the end section (5, 6) and through the centring mandrel (15, 16) provided downwards in the elongation thereof.

5. Outlet of a distributor according to one of claims 1 through 4,
**characterized in**
**that** the partial outflow ducts (3, 4) are tube ducts and
**that** the end sections of the partial outflow ducts (3, 4) are formed as deflecting tubes.

6. Outlet of a distributor according to one of the foregoing claims,
**characterized in**
**that** the coffee inlet (2) is a coffee inlet tube and
**that** from a lower opening of the coffee inlet tube, the partial outflow ducts (3, 4) are branched off.

## Revendications

1. Distributeur de sortie pour machine à expresso, comprenant une entrée de café commune (2) et au moins deux ouvertures de sortie partielles (19, 20) qui sont en communication pour l'écoulement avec cette entrée, ainsi que des moyens de stabilisation de l'écoulement disposés en amont des ouvertures de sortie partielles,
dans lequel deux conduites de sortie partielles (3, 4) branchées sur l'entrée de café commune (2) présentent chacune un segment terminal ouvert (5, 6) qui est dirigé vers une chicane (9, 10) dans une chambre à chicane (11, 12), et
dans laquelle chaque chambre à chicane (11, 12), est formée dans un corps de sortie (7, 8) respectif qui présente une des ouvertures de sortie partielles (19, 20) à une certaine distance au-dessous de la chicane (9, 10),
**caractérisé**
**en ce que** les corps de sortie (7, 8) sont cylindriques, au moins intérieurement, et sont fermés en haut, chacun par l'une des chicanes (9, 10) et en ce qu'au moins les segments germinaux (5, 6) des conduites de sortie partielles (3, 4) sont cylindriques, chacun orienté vers le haut dans l'un des corps de sortie (7, 8) et disposé coaxialement à ce dernier, de telle sorte qu'il se forme entre une surface latérale intérieure du corps de sortie (7, 8) et le segment terminal (5, 6) de la conduite de sortie partielle (3, 4) un canal de sortie cylindrique (13, 14) qui s'ouvre en haut vers la chicane et en bas vers l'ouverture de sortie partielle (19, 20) du corps de sortie (7, 8).

2. Distributeur de sortie selon la revendication 1,
**caractérisé**
**en ce que**, dans le corps de sortie (7, 8), un mandrin de centrage (15,16) se raccorde en bas à chacun des segments terminaux dirigés vers le haut (5, 6) des conduites de sortie partielles (3, 4).

3. Distributeur de sortie selon la revendication 1 ou 2,
**caractérisé**
**en ce qu'**un croisillon de distributeur (21, 22) est disposé dans chacune des ouvertures de sortie partielles (19, 20).

4. Distributeur de sortie selon la revendication 2 ou 3,
**caractérisé**
**en ce qu'**un alésage central traversant (17, 18) s'étend à travers une paroi inférieure du segment terminal (5, 6) et à travers le mandrin de centrage (15, 16) qui se raccorde en bas à cette paroi.

5. Distributeur de sortie selon l'une des revendications 1 à 4,
**caractérisé**
**en ce que** les conduites de sortie partielles (3, 4) sont des conduites tubulaires et en ce que les segments terminaux des conduites de sortie partielles (3, 4) ont la forme de tubulures de changement de direction.

6. Distributeur de sortie selon l'une des revendications précédentes,
**caractérisé**
**en ce que** l'entrée de café (2) est un tube d'entrée de café et en ce que les conduites de sortie partielles (3, 4) sont branchées sur une ouverture inférieure du tube d'entrée de café.
